# EUROPÄISCHE PATENTSCHRIFT

(11) **EP 3 069 929 B1**
(45) Veröffentlichungstag und Bekanntmachung des Hinweises auf die Patenterteilung: **15.03.2017**
(21) Anmeldenummer: 15159478.5
(22) Anmeldetag: 17.03.2015
(51) Int. Cl.: B60P 7/08

(54) **Verwendung eines Lochs in einem Querträger**
Use of a hole in a transverse beam
L'utilisation d'un trou dans une poutre transversal

(43) Veröffentlichungstag der Anmeldung: 21.09.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- EP-A1- 0 296 085
- WO-A1-2004/020268
- DE-A1- 10 107 598
- DE-U1- 20 313 685
- DE-U1-202010 011 440
- DE-U1-202012 000 928
- GB-A- 667 176
- US-A- 2 812 192
- US-A- 3 856 344
- US-A- 5 398 832

## Beschreibung

### Technisches Gebiet

Die vorliegende Erfindung betrifft eine Verwendung eines Lochs in einem Querträger eines Fahrzeugrahmens eines Fahrzeuganhängers.

### Technischer Hintergrund

Fahrzeuganhänger weisen üblicherweise einen Fahrzeugrahmen mit Längs- und Querträgern auf, die zumeist miteinander verschweißt sind. Auf dem Fahrzeugrahmen ist beispielsweise eine Ladefläche zum Transport von Ladegut ausgebildet.

Auf der Ladefläche transportiertes Ladegut wird üblicherweise durch am Fahrzeuganhänger befestigte Ladungssicherungselemente, insbesondere durch Zurrelemente, wie beispielsweise Zurrgurte oder Zurrketten, gesichert, um ein Verrutschen des Ladeguts durch während der Fahrt auftretende Kräfte zu verhindern. Insbesondere bestehen zur Ladungssicherung im Straßenverkehr üblicherweise gesetzliche Vorschriften. In der Regel muss das Ladegut derart gesichert werden, dass es selbst bei abrupten Bremsvorgängen oder Ausweichmanövern nicht verrutscht.

Bei abrupten Bremsvorgängen oder Ausweichmanövern können teilweise erhebliche Kräfte auf das Ladegut wirken, die von den beispielsweise verwendeten Zurrelementen kompensiert werden. Daher müssen die Zurrelemente stabil und sicher am Fahrzeuganhänger befestigt werden. Insbesondere müssen Befestigungspunkte, an denen die Zurrelemente am Fahrzeuganhänger befestigt werden, zur Aufnahme der auftretenden Kräfte und zur sicheren Befestigung der Zurrelemente geeignet sein.

Des Weiteren ist für die Aufnahme der auftretenden Kräfte die Anordnung der Zurrelemente relativ zu dem zu sichernden Ladegut von großer Bedeutung. Insbesondere müssen die Zurrelemente derart über bzw. um das zu sichernde Ladegut verlaufen, dass ein Verrutschen des Ladeguts verhindert wird. In diesem Zusammenhang spielt die Position der Befestigungspunkte, an denen die Zurrelemente am Fahrzeuganhänger befestigt werden, eine bedeutende Rolle. Auch die Erreichbarkeit der Befestigungspunkte für mit der Ladungssicherung betrauten Personen ist von großer Bedeutung, da die Zurrelemente in der Regel bei jedem Be- und Entladen des transportierten Ladeguts an den Befestigungspunkten befestigt, bzw. von diesen gelöst werden.

Es ist bekannt, Zurrösen zur lösbaren Befestigung von Zurrelementen an einer Ladefläche eines Fahrzeuganhängers vorzusehen. Beispielsweise offenbaren DE 94 15 316 U1 und DE 198 06 448 A1 Zurrösen an einer Ladefläche bzw. einem Rahmenprofil, die bei Nichtgebrauch auf oder unter die Ebene der Ladefläche versenkbar bzw. absenkbar sind, so dass sie nicht störend in die Ebene der Ladefläche hineinragen.

Beim Transport sperrigen oder voluminösen Ladeguts können derartige an der Ladefläche oder dem Rahmenprofil ausgebildete Zurrösen durch das Ladegut verdeckt werden, so dass sie nicht zur Befestigung von Zurrelementen zur Verfügung stehen. In diesem Fall sind alternative Möglichkeiten zur sicheren Befestigung von Zurrelementen erforderlich.

Beispielsweise werden Zurrelemente teilweise mittels Haken an dem Fahrzeugrahmen eingehängt und von dort über die Ladefläche und über bzw. um das zu sichernde Ladegut gespannt. Dabei ist es jedoch meist schwierig, geeignete Befestigungspunkte zur Befestigung der Haken zu finden, die einen sicheren und stabilen Halt der Haken gewährleisten.

Ein der Erfindung zu Grund liegendes Problem besteht darin, an einem Fahrzeugrahmen für einen Fahrzeuganhänger geeignete Befestigungspunkte zur lösbaren Befestigung von Zurrelementen vorzusehen, die auch beim Transport sperrigen und voluminösen Ladeguts zur Verfügung stehen und eine stabile Befestigung der Zurrelemente ermöglichen.

### Darstellung der Erfindung

Gemäß einem Aspekt der vorliegenden Offenbarung weist ein Fahrzeugrahmen eines Fahrzeuganhängers Längsträger und Querträger auf, welche die Längsträger miteinander verbinden. In Außenbereichen, die sich von den Enden der Querträger bis zu einer Tiefe von 100 mm bis 800 mm entlang der Querträger in Richtung auf die gegenüberliegende Enden der Querträger erstrecken, ist jeweils mindestens ein Loch ausgebildet, das zur lösbaren Befestigung von Haken von Zurrelementen an einem Rand des Lochs ausgebildet ist.

Das Vorsehen der Löcher an den Querträgern unterhalb der beispielsweise auf dem Fahrzeugrahmen ausgebildeten Ladefläche gewährleistet, dass die Löcher auch beim Transport sperrigen oder voluminösen Ladeguts zur lösbaren Befestigung von Zurrelementen zur Verfügung stehen. Des Weiteren ermöglicht das Vorsehen der Löcher an den Querträgern eine sichere und stabile Befestigung der Haken und eine zweckmäßige Anordnung der Zurrelemente. Eine zweckmäßige Anordnung der Zurrelemente bedeutet dabei, dass die Zurrelemente derart über bzw. um das zu sichernde Ladegut verlaufen, dass dieses zuverlässig gegen ein Verrutschen während der Fahrt gesichert wird. Zudem erfordert das Vorsehen der Löcher lediglich einen geringen Mehraufwand bei der Herstellung der Querträger und ist daher kostengünstig möglich. Dadurch wird gleichzeitig eine Gewichtsersparnis erzielt, was unmittelbar zu einem Zugewinn bei der Nutzlast führt.

Die in den Außenbereichen der Querträger vorgesehenen Löcher sind für die mit der Ladungssicherung betrauten Personen einfach zu erreichen. Die Tiefe der Außenbereiche von 100 mm bis 800 mm entspricht einem vorteilhaften Wert, der gewährleistet, dass die Löcher zum Befestigen und Lösen der Haken unter Annahme einer üblichen Armlänge aus einer Position seitlich neben dem Fahrzeuganhänger gut zu erreichen sind. Somit ist es zum Befestigen und Lösen der Haken nicht erforderlich, sich unter den Fahrzeuganhänger zu begeben. Je nach Gegebenheit ist es möglich, andere vorteilhafte Werte von beispielsweise 500 mm für die Tiefe der Außenbereiche zu wählen.

Die Anzahl der Löcher ist nicht zwingend auf ein Loch pro Außenbereich beschränkt. In jedem Außenbereich können ein, zwei oder mehrere Löcher ausgebildet sein. Die Anzahl der Löcher kann in jedem Außenbereich gleich oder verschieden sein. Bei einer bevorzugten Ausgestaltung sind beispielsweise in jedem Außenbereich vier Löcher ausgebildet.

Bei einer weiteren bevorzugten Ausgestaltung ist in Innenbereichen der Querträger, die sich zwischen den Außenbereichen der Querträger entlang der Querträger erstrecken, jeweils mindestens ein Loch ausgebildet, das zur lösbaren Befestigung von Haken von Zurrelementen ausgebildet ist. In einer beispielsweise auf dem Fahrzeugrahmen ausgebildeten Ladefläche können in einem Bereich, der über dem Innenbereich der Querträger liegt, beispielsweise eine oder mehrere Öffnungen ausgebildet sein. Durch diese Öffnungen in der Ladefläche können die Zurrelemente nach unten hindurch geführt und deren Haken an dem mindestens einen Loch im Innenbereich sicher und stabil befestigt werden. Bei dieser Ausgestaltung ist eine zweckmäßige Anordnung der Zurrelemente möglich. Das mindestens eine Loch kann durch die Öffnungen von der Ladefläche aus einfach erreicht werden. Die Öffnungen sind derart bemessen, dass die Zurrelemente und insbesondere die Haken der Zurrelemente durch die Öffnungen hindurchgeführt werden können.

Bei einer weiteren bevorzugten Ausgestaltung weisen zwei Seitenlängsprofile des Fahrzeugrahmens jeweils einen oberen Wandabschnitt, einen seitlichen Wandabschnitt und einen schrägen Wandabschnitt auf, der in Bezug auf den oberen Wandabschnitt und den seitlichen Wandabschnitt schräg ausgebildet ist. Entlang einer Kante zwischen dem schrägen Wandabschnitt und dem seitlichen Wandabschnitt ist eine Vielzahl von Löchern ausgebildet, die zur lösbaren Befestigung von Haken von Zurrelementen ausgebildet sind. Beispielsweise können an jedem Seitenlängsprofil 20 Löcher ausgebildet sein.

Die Befestigung der Haken der Zurrelemente an den Rändern der Löcher entlang der Kante zwischen dem schrägen Wandabschnitt und dem seitlichen Wandabschnitt der Seitenlängsprofile gewährleistet eine vorteilhafte Krafteinleitung, insbesondere einen geradlinigen Verlauf der Zurrelemente ohne Kraftumlenkung. Somit können die Haken der Zurrelemente sicher und stabil befestigt werden. Insbesondere kann der Winkel, unter dem der schräge Wandabschnitt in Bezug auf den oberen Wandabschnitt ausgebildet ist, derart gewählt werden, dass eine vorteilhafte Krafteinleitung gewährleistet wird. Darüber hinaus ermöglicht das Vorsehen der Löcher entlang der Kante an den Seitenlängsprofilen selbst beim Transport sperrigen und voluminösen Ladeguts eine zweckmäßige Anordnung der Zurrelemente und eine einfache Erreichbarkeit der Löcher, und das Vorsehen der Löcher entlang der Kante der Seitenlängsprofile hat zur Folge, dass die Haken der Zurrelemente zum Befestigen bzw. Lösen einfach in die Löcher eingebracht bzw. aus diesen entfernt werden können.

Bei einer weiteren bevorzugten Ausgestaltung sind die Löcher an den Querträgern und/oder an den Seitenlängsprofilen als Durchgangslöcher, beispielsweise als Durchgangsbohrungen, ausgebildet. Alternativ können anstelle der Löcher auch Haken, Ösen, Vorsprünge oder dergleichen in den Außenbereichen und den Innenbereichen ausgebildet sein. Die Durchgangslöcher können auch als Stufenlöcher zum Einhängen der Haken der Zurrelemente an abgestuften Rändern der Stufenlöcher ausgebildet sein. Die Löcher können rund, rechteckig oder in einer anderen geometrischen Form ausgebildet sein. Derartige Löcher ermöglichen eine sichere und stabile lösbare Befestigung der Haken der Zurrelemente.

Bei einer weiteren bevorzugten Ausgestaltung weisen die Löcher an den Querträgern und/oder an den Seitenlängsprofilen, die beispielsweise als Durchgangslöcher ausgebildet sind, einen Durchmesser von mindestens 10 mm und von höchstens 300 mm auf. Derart ausgebildete Löcher sind zur lösbaren Befestigung von Haken üblicher Zurrelemente, wie beispielsweise Zurr- oder Spanngurten, Zurrketten oder dergleichen, geeignet.

Die Querträger und/oder die Seitenlängsprofile weisen an den Rändern der Löcher eine Stärke in einem Bereich von 1 mm bis 40 mm auf. Somit können die Haken typischerweise verwendeter Zurrelemente ohne weiteres an den Rändern der Löcher eingehängt werden.

Bei einer weiteren bevorzugten Ausgestaltung sind die Querträger als Z-, U-, L-, T-, Doppel-T- oder Omega-Träger ausgebildet. Derartige Querträger gewährleisten eine hohe Stabilität des Fahrzeugrahmens und damit eine sichere und stabile Befestigung der Haken der Zurrelemente an den Querträgern bzw. den Seitenlängsprofilen des Fahrzeugrahmens.

Ein weiterer Aspekt der vorliegenden Offenbarung betrifft einen Fahrzeuganhänger mit dem oben beschriebenen Fahrzeugrahmen.

Bei einer bevorzugten Ausgestaltung weist der Fahrzeuganhänger eine Mehrzahl von Rungen mit Bretttaschen zur Aufnahme von Seitenbrettern auf. Die Seitenbretter dienen der Ladungssicherung und insbesondere auch der Stabilisierung eines auf dem Fahrzeuganhänger ausgebildeten Planenaufbaus oder der seitlichen Begrenzung der Ladefläche. Die unteren Bretttaschen sind derart ausgebildet, dass zwischen der unteren Kante eines unteren Seitenbretts und einem oberen Wandabschnitt eines unterhalb des unteren Seitenbretts verlaufenden Seitenlängsprofils ein vertikaler Abstand von beispielsweise mindestens 30 mm zur Durchführung von Zurrelementen ausgebildet ist. Es kann jedoch auch ein anderer Abstand von beispielsweise 40 mm oder 50 mm ausgebildet sein. Zurrelemente, deren Haken an den Rändern der Löcher in den Querträgern und/oder den Seitenlängsprofilen des Fahrzeugrahmens befestigt sind, können zwischen der unteren Kante der unteren Seitenbretts und dem schrägen bzw. oberen Wandabschnitt des Seitenlängsprofils durchgeführt und über die Ladefläche und über bzw. um das zu sichernde Ladegut gespannt werden.

### Kurze Beschreibung der Zeichnungen

Weitere Merkmale und Aspekte dieser Offenbarung werden durch die folgende Beschreibung und die beiliegenden Zeichnungen offensichtlich, von denen:
Fig. 1 eine perspektivische Ansicht eines Fahrzeugrahmens einer bevorzugten Ausführungsform von schräg oben zeigt,
Fig. 2A eine erste Ausgestaltung eines Querträger in einer Schnittansicht entlang der Linie I-I in Fig. 1 zeigt,
Fig. 2B einen Bereich des Querträgers mit einem eingehängten Zurrgurt zeigt,
Fig. 2C eine zweite Ausgestaltung des Querträger in einer Schnittansicht entlang der Linie I-I in Fig. 1 zeigt,
Fig. 3A eine perspektivische Ansicht eines Seitenlängsprofils zeigt,
Fig. 3B das Seitenlängsprofil in einer Schnittansicht entlang der Ebene II-II in Fig. 3A zeigt, und
Fig. 3C die Schnittansicht der Fig. 3B mit einem eingehängten Zurrgurt zeigt.

### Ausführliche Beschreibung von Ausführungsbeispielen

In der Beschreibung dieser Erfindung beziehen sich Richtungsangaben auf einen Fahrzeuganhänger bei Vorwärtsfahrt. In Längsrichtung bedeutet diejenige Richtung, die entlang einer Vorwärtsfahrtrichtung V des Fahrzeuganhängers verläuft und der Vorne-Hinten-Richtung entspricht. In seitlicher Richtung bedeutet diejenige Richtung, die horizontal entlang der Senkrechten zu der Vorwärtsfahrtrichtung V des Fahrzeuganhängers verläuft und der Links-Rechts-Richtung entspricht. Außen bedeutet am linken oder rechten seitlichen Rand des Fahrzeuganhängers. Innen bedeutet zwischen dem linken und rechten seitlichen Rand des Fahrzeuganhängers.

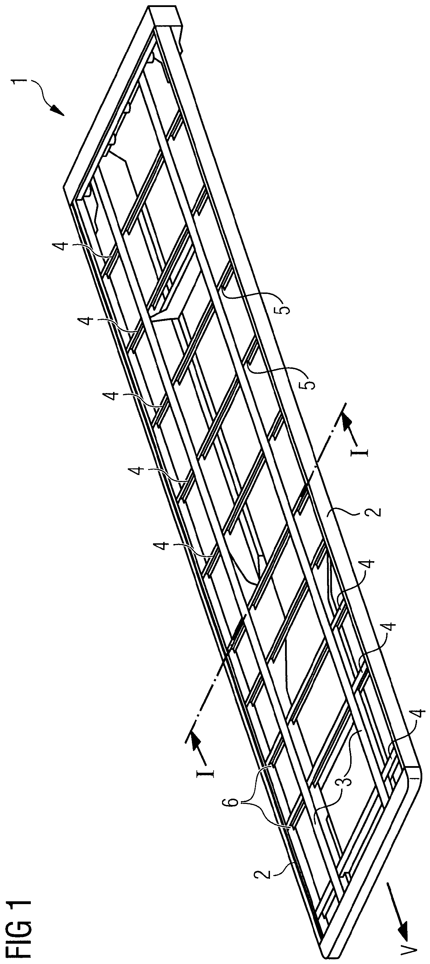

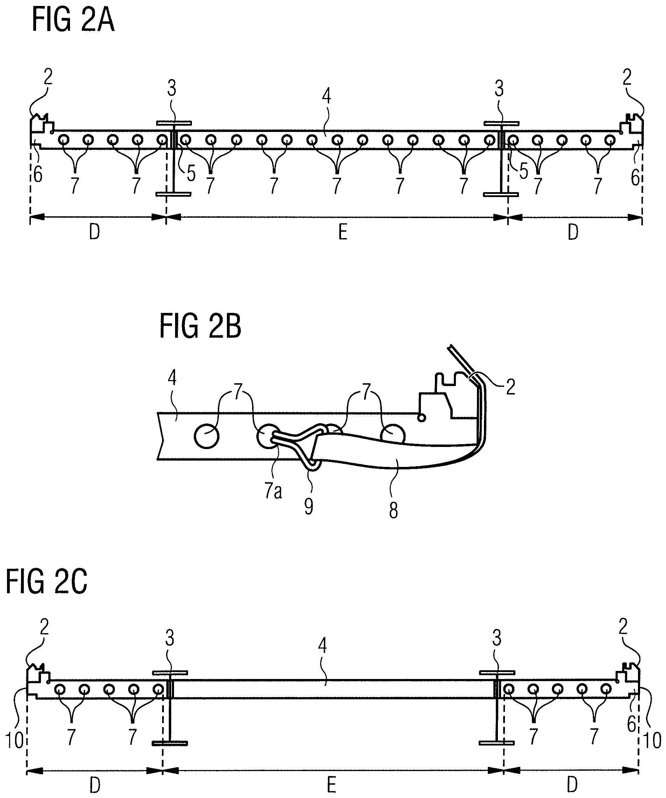

Im Folgenden wird eine bevorzugte Ausführungsform der vorliegenden Offenbarung mit Bezug auf die Figuren 1, 2A und 2B beschrieben.

Fig. 1 zeigt einen Fahrzeugrahmen 1 für einen Fahrzeuganhänger in einer perspektivischen Ansicht von schräg oben. Der Fahrzeugrahmen weist zwei Seitenlängsprofile 2, zwei Längsträger 3 und eine Mehrzahl von Querträgern 4 auf. Die Seitenlängsprofile 2 und die Längsträger 3 verlaufen im Wesentlichen in einer Längsrichtung längs einer Vorwärtsfahrtrichtung V. Die Querträger 4 verlaufen im Wesentlichen in einer Richtung senkrecht zu der Längsrichtung.

Bei der bevorzugten Ausführungsform weist der Fahrzeugrahmen 1 zwei Seitenlängsprofile 2 auf. Alternativ kann eine andere Anzahl von Seitenlängsprofilen 2 vorgesehen sein. Beispielsweise können die Seitenlängsprofile weggelassen werden.

Bei der bevorzugten Ausführungsform weist der Fahrzeugrahmen 1 zwei Längsträger 3 auf. Alternativ kann eine andere Anzahl von Längsträgern 3 vorgesehen sein. Beispielsweise können ein, drei oder mehrere Längsträger 3 vorgesehen sein.

Bei der bevorzugten Ausführungsform weist der Fahrzeugrahmen 1 mehrere Querträger 4 auf, die senkrecht zu der Längsrichtung verlaufen. Je nach Gegebenheit kann eine beliebige Anzahl von Querträgern 4 vorgesehen sein.

Die Querträger 4 verlaufen durch Aussparungen 5 der Längsträger 3 und sind mit diesen verbunden. Alternativ können die Querträger 4 beispielsweise auf den Längsträgern 3 aufliegen und mit diesen verbunden sein. Die Querträger 4 erstrecken sich zu beiden Seiten über die Hauptlängsträger 3 hinaus und sind an seitlichen Endbereichen 6 mit den Seitenlängsprofilen 2 verbunden. Die Längsträger 3 und die Seitenlängsprofile 2 sind beispielsweise mit den Querträgern 4 verschweißt bzw. vernietet.

Die Seitenlängsprofile 2, die Längsträger 3 und die Querträger 4 bilden den im Wesentlichen rechteckigen Fahrzeugrahmen 1, auf dem beispielsweise eine Ladefläche (nicht dargestellt) zum Transport von Ladegut ausgebildet sein kann.

Fig. 2A zeigt eine erste Ausgestaltung eines Querträgers 4 in einem Schnitt des Fahrzeugrahmens 1 entlang der Linie I-I in Fig. 1. Der Querträger 4 verläuft durch Aussparungen 5 der Längsträger 3 und ist an seinen seitlichen Endbereichen 6 mit den Seitenlängsprofilen 2 verbunden.

An dem Querträger 4 ist eine Mehrzahl von Löchern 7 ausgebildet. Die Löcher 7 können beispielsweise als Durchgangslöcher, insbesondere Durchgangsbohrungen, ausgebildet sein. Die Durchgangslöcher können beispielsweise als Stufenlöcher ausgebildet sein. Die Löcher 7 weisen beispielsweise einen Durchmesser in einem Bereich von 10 mm bis 300 mm auf. Bei dem in Fig. 2A dargestellten Querträger 4 sind die Durchmesser der Löcher 7 im Wesentlichen gleich. Alternativ können die Löcher 7 unterschiedliche Durchmesser aufweisen.

Fig. 2B zeigt einen Zurrgurt 8, der mittels eines Hakens 9 des Zurrgurtes 8 an einem Rand 7a eines der Löcher 7 in dem Querträger 4 eingehängt und somit an diesem lösbar befestigt ist. Der Zurrgurt 8 entspricht einem Zurrelement der vorliegenden Offenbarung. Der Zurrgurt 8 verläuft entlang des Querträgers 4 um das Seitenlängsprofil 2 herum nach oben zu der beispielsweise auf dem Fahrzeugrahmen 1 ausgebildeten Ladefläche. Alternativ kann der Zurrgurt 8 in einer anderen Richtung, beispielsweise schräg oder senkrecht zu dem Querträger 4, verlaufen. Ein anderes Ende des Zurrgurtes 8 kann beispielsweise an einem Rand 7a eines anderen Lochs 7 desselben oder eines anderen Querträgers 4 oder einem an der Ladefläche vorgesehenen Befestigungselement, wie beispielsweise einem Loch, einem Haken oder einer Öse, angebracht werden.

Das Querprofil 4 weist an dem Rand 7a des Lochs 7 beispielsweise eine Stärke in einem Bereich von 1 mm bis 40 mm auf. Somit kann der Zurrgurt 8 durch Einhängen des Hakens 9 an dem Rand 7a des Lochs 7 und Straffen bzw. Spannen des Zurrgurtes 8 mittels einer an dem Zurrgurt 8 vorgesehenen Spannvorrichtung (nicht dargestellt) sicher und stabil an dem Querträger 4 befestigt werden. Auf der Ladefläche befindliches Ladegut kann durch Straffen bzw. Spannen des Zurrgurtes 8 festgezurrt und dadurch gegen Verrutschen gesichert werden. Durch Lösen der Spannung des Zurrgurtes 8 kann der Haken 9 von dem Rand 7a des Lochs 7 gelöst werden.

Bei dem in Fig. 2A dargestellten Querträger 4 sind die Löcher 7 im Wesentlichen in regelmäßigen Abständen über die gesamte Länge des Querträgers 4 ausgebildet. Bei dem in Fig. 2A dargestellten Querträger 4 sind in den zwei Außenbereichen D des in Fig. 2A dargestellten Querträgers 4 jeweils fünf Löcher 7 ausgebildet. Alternativ kann eine andere Anzahl von Löchern 7 in den Außenbereichen D ausgebildet sein. Insbesondere können in jedem Außenbereich D vier Löcher 7 ausgebildet sein. Generell kann in jedem Außenbereich D mindestens ein Loch 7 ausgebildet sein.

Die zwei Außenbereiche D erstrecken sich von zwei seitlichen Enden 10 des Querträgers 4 jeweils bis zu einer bevorzugten Tiefe von 100 mm bis 800 mm entlang des Querträgers 4 in Richtung auf das gegenüberliegende Ende 10 des Querträgers 4. Insbesondere können die Außenbereiche D der Querträger 4 bis zu unterschiedlichen Tiefen ausgebildet sein.

Die in den Außenbereichen D ausgebildeten Löcher 7 können von mit der Ladungssicherung betrauten Personen zum Befestigen bzw. Lösen der Haken 9 der Zurrelemente 8 an den Rändern 7a der Löcher 7 einfach erreicht werden.

Zusätzlich zu den in den zwei Außenbereichen D ausgebildeten Löchern 7 sind in einem Innenbereich E, der sich zwischen den zwei Außenbereichen D entlang des Querträger 4 erstreckt, weitere Löcher 7 ausgebildet, die zur lösbaren Befestigung der Haken 9 der Zurrelemente 8 an Rändern 7a der Löcher 7 ausgebildet sind. Die Löcher 7 in dem Innenbereich E können, wie oben beschrieben wurde, durch Öffnungen in einer beispielsweise auf dem Fahrzeugrahmen ausgebildeten Ladefläche von der Ladefläche aus einfach erreicht werden. Die Zurrelemente 8, deren Haken 9 an den Rändern 7a der Löcher 7 in dem Innenbereich E befestigt sind, können beispielsweise durch die Öffnungen hindurch zu der Ladefläche geführt werden.

Es sei angemerkt, dass anstelle der Löcher 7 beispielsweise Haken, Ösen, Vorsprünge oder dergleichen zur Befestigung von Zurrelementen an den Querträgern vorgesehen sein können. Darüber hinaus können die Löcher 7 in unregelmäßigen Abständen und unterschiedlichen Größen ausgebildet sein.

Fig. 2C zeigt eine zweite Ausgestaltung des Querträgers 4, der anstelle des in Fig. 2A dargestellten Querträgers 4 zur Ausbildung des Fahrzeugrahmens 1 verwendet werden kann. Der in Fig. 2C dargestellte Querträger 4 ist im Wesentlichen ähnlichem dem in Fig. 2A dargestellten Querträger 4. Daher werden im Folgenden lediglich die von dem in Fig. 2A dargestellten Querträger 4 verschiedenen Merkmale beschrieben.

Bei dem in Fig. 2C dargestellten Querträger 4 sind die Löcher 7 ausschließlich in den zwei Außenbereichen D des Querträgers 4 ausgebildet. Im Gegensatz zu der in Fig. 2A dargestellten ersten Ausgestaltung sind in dem Innenbereich E des Querträgers 4 keine Löcher 7 ausgebildet.

Die in den Außenbereichen D ausgebildeten Löcher 7 können von den mit der Ladungssicherung betrauten Personen zum Befestigen bzw. Lösen der Haken 9 der Zurrelemente 8 an den Rändern 7a der Löcher 7 einfach erreicht werden.

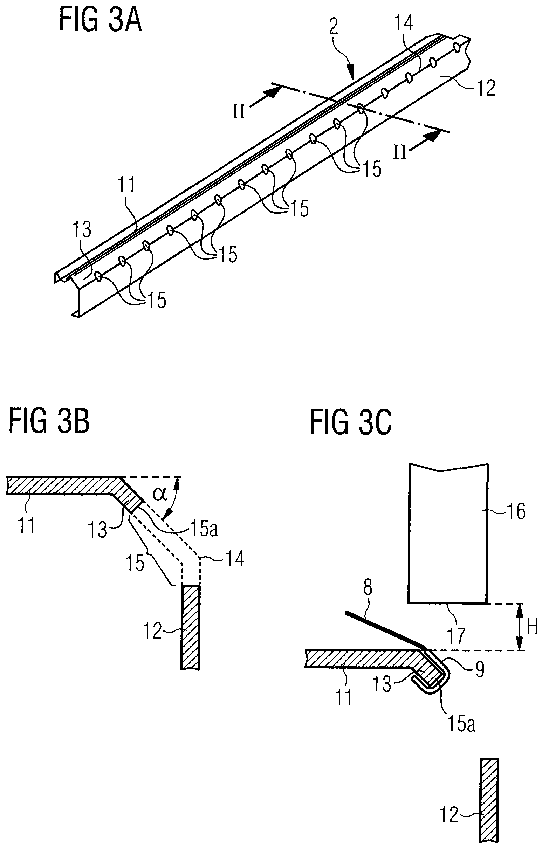

Fig. 3A zeigt ein Seitenlängsprofil 2 des Fahrzeugrahmens 1 in einer perspektivischen Ansicht. Fig. 3B zeigt das Seitenlängsprofil 2 in einer Schnittansicht entlang der Ebene II-II in Fig. 3A. Das Seitenlängsprofil 2 weist einen oberen Wandabschnitt 11 und einen seitlichen Wandabschnitt 12 auf. Zwischen dem oberen Wandabschnitt 11 und dem seitlichen Wandabschnitt 12 ist ein schräger Wandabschnitt 13 unter einem Winkel α in Bezug auf den oberen Wandabschnitt 11 ausgebildet. Der Winkel α kann beispielsweise in einem Bereich von 20° bis 80° gewählt werden. Insbesondere kann der Winkel α beispielsweise ungefähr 45° oder 51° sein.

An einer Kante 14 zwischen dem schrägen Wandabschnitt 13 und dem seitlichen Wandabschnitt 12 ist eine Mehrzahl von Löchern 15 beispielsweise in Form von Durchgangslöchern ausgebildet. Die Löcher 15 weisen beispielsweise einen Durchmesser von mindestens 10 mm und höchstens 300 mm auf. Die Löcher können auch andere Durchmesser aufweisen. Bei der bevorzugten Ausführungsform sind die Durchmesser der Löcher 15 gleich. Alternativ können die Löcher 15 unterschiedliche Durchmesser aufweisen. Bei der bevorzugten Ausführungsform sind die Löcher 15 in regelmäßigen Abständen entlang der Kante 14 des Seitenlängsprofils ausgebildet. Alternativ können die Löcher 15 in unregelmäßigen Abständen oder in einem, zwei oder mehreren bestimmten Bereichen ausgebildet sein.

Das Längsprofil 2 weist an Rändern 15a der Löcher 15 eine Stärke in einem Bereich von 3 mm bis 30 mm auf.

Fig. 3C zeigt einen Zurrgurt 8, der mittels eines Hakens 9 an einem Rand 15a eines Lochs 15 in dem Seitenlängsprofil 2 eingehängt und somit an diesem lösbar befestigt ist. Der Zurrgurt 8 entspricht einem Zurrelement der vorliegenden Offenbarung. Ein anderes Ende des Zurrgurtes 8 kann beispielsweise mittels eines Hakens 9 an einem Rand 15a eines Lochs 15 des anderen Seitenlängsprofils 2, an einem Rand 7a eines Lochs 7 eines Querträgers 4 oder an einem an der beispielsweise auf dem Fahrzeugrahmen 1 ausgebildeten Ladefläche vorgesehenen Befestigungselement, wie beispielsweise einem Loch, einem Haken oder einer Öse, befestigt werden.

Der Zurrgurt 8 kann durch Einhängen des Hakens 9 an dem Rand 15a des Lochs 15 und Straffen bzw. Spannen des Zurrgurtes 8 mittels einer an dem Zurrgurt 8 vorgesehenen Spannvorrichtung (nicht dargestellt) sicher und stabil an dem Seitenlängsprofil 2 befestigt werden. Auf der Ladefläche befindliches Ladegut kann durch Straffen bzw. Spannen des Zurrgurtes 8 festgezurrt und somit gegen Verrutschen gesichert werden. Nach Lösen der Spannung des Zurrgurtes 8 kann der Haken 9 von dem Rand 15a des Lochs 15 gelöst werden.

Es sei angemerkt, dass anstelle der Löcher 15 beispielsweise Haken, Ösen, Vorsprünge oder dergleichen zur Befestigung der Haken 9 der Zurrelemente 8 an den Seitenlängsprofilen 2 vorgesehen sein können.

Des Weiteren ist in Fig. 3C eine unteres Seitenbrett 16 des Fahrzeuganhängers dargestellt. Das untere Seitenbrett 16 kann zu einer Mehrzahl von Seitenbrettern gehören, die beispielsweise zur Stabilisierung eines auf dem Fahrzeuganhänger ausgebildeten Planenaufbaus, zur Ladungssicherung oder zur seitlichen Begrenzung einer Ladefläche vorgesehen sind. Die Seitenbretter können beispielsweise in Bretttaschen an Rungen (nicht dargestellt) am Fahrzeuganhänger eingesetzt bzw. eingelegt sein.

Eine untere Kante 17 des unteren Seitenbretts 16 ist um eine Höhe H in Bezug auf den oberen Wandabschnitt 11 des unterhalb des unteren Seitenbretts 16 verlaufenden Seitenlängsprofils 2 erhöht vorgesehen. Dies kann beispielsweise dadurch erreicht werden, dass die unteren Brettaschen, in denen das untere Seitenbrett 16 eingesetzt ist, erhöht ausgebildet sind. Die Höhe H stellt einen vertikalen Abstand zwischen dem oberen Wandabschnitt 11 und der unteren Kante 17 dar und kann beispielsweise 30 mm oder mehr betragen.

Der Zurrgurt 8 verläuft entlang des schrägen Wandabschnitts 13 zwischen dem Seitenlängsprofil 2 und der unteren Kante 17 des unteren Seitenbretts 16 hindurch zu der beispielsweise auf dem Fahrzeugrahmen 1 ausgebildeten Ladefläche. Somit kann der mittels des Hakens 9 an dem Seitenlängsprofil 2 befestigte Zurrgurt 8 zur Sicherung von Ladegut auf der Ladefläche verwendet werden. Dies ist insbesondere auch bei ordnungsgemäßer Verwendung der Seitenbretter möglich.

Es sei angemerkt, dass die Merkmale der oben beschriebenen bevorzugten Ausführungsform auch unabhängig voneinander verwendet werden können, ohne dabei von der vorliegenden Offenbarung abzuweichen. Insbesondere kann der Fahrzeugrahmen 1 sowohl die beschriebenen Querträger 4 mit den Löchern 7 als auch die beschriebenen Seitenlängsprofile 2 mit den Löchern 15 aufweisen. Alternativ können die beschriebenen Querträger 4 und die beschriebenen Seitenlängsprofile 2 auch unabhängig voneinander verwendet werden. Beispielsweise kann der Fahrzeugrahmen 1 Querträger 4 mit den Löchern 7 und Längsprofile ohne Löcher aufweisen, oder der Fahrzeugrahmen 1 kann Querträger ohne Löcher und Längsprofile 2 mit den Löchern 15 aufweisen.

Obwohl die bevorzugten Ausführungsformen dieser Offenbarung hierin beschrieben worden sind, können Verbesserungen und Modifikationen hierin eingearbeitet sein, ohne vom Schutzbereich der folgenden Ansprüche abzuweichen.

## Patentansprüche

1. Verwendung eines Lochs (7) in einem Querträger (4), der die Längsträger (3) eines Fahrzeugrahmens (1) eines Fahrzeuganhängers verbindet, zur lösbaren Befestigung eines Hakens (9) eines Zurrelements (8) an einem Rand (7a) des Lochs (7), das in einem Außenbereich (D) eines der Querträger (4) ausgebildet ist, der sich von einem Ende (10) des Querträgers (4) bis zu einer Tiefe von 100 mm bis 800 mm entlang des Querträgers (4) in Richtung auf das gegenüberliegende Ende (10) erstreckt.

2. Verwendung nach Anspruch 1, wobei in Innenbereichen (E), die sich zwischen den Außenbereichen (D) der Querträger (4) erstrecken, jeweils mindestens ein Loch (7) ausgebildet ist, und mindestens eines der Löcher (7) in den Innenbereichen (E) zur lösbaren Befestigung eines Hakens (9) eines Zurrelements (8) an einem Rand (7a) des Lochs (7) verwendet wird.

3. Verwendung nach einem der vorhergehenden Ansprüche, wobei der Fahrzeugrahmen (1) ferner zwei Seitenlängsprofile (2) aufweist, die jeweils einen oberen Wandabschnitt (11), einen seitlichen Wandabschnitt (12) und einen schrägen Wandabschnitt (13) aufweisen, wobei entlang einer Kante (14) zwischen dem schrägen Wandabschnitt (13) und dem seitlichen Wandabschnitt (12) eine Vielzahl von Löchern (15) ausgebildet ist, und mindestens eines der Vielzahl von Löchern (15) zur lösbaren Befestigung eines Hakens (9) eines Zurrelements (8) an einem Rand (15a) des Lochs (15) verwendet wird.

4. Verwendung nach Anspruch 3, wobei der schräge Wandabschnitt (13) unter einem Winkel (α) in einem Bereich von 20° bis 80° in Bezug auf den oberen Wandabschnitt (11) ausgebildet ist.

5. Verwendung nach einem der vorhergehenden Ansprüche, wobei die Löcher (7, 15) als Durchgangslöcher ausgebildet sind.

6. Verwendung nach einem der vorhergehenden Ansprüche, wobei die Löcher (7, 15) einen Durchmesser in einem Bereich von 10 mm bis 300 mm aufweisen.

7. Verwendung nach einem der vorhergehenden Ansprüche, wobei die Querträger (4) und die Seitenlängsprofile (2) an den Rändern (7a, 15a) der Löcher (7, 15) eine Stärke in einem Bereich von 1 mm bis 40 mm aufweisen.

8. Verwendung nach einem der Ansprüche 2 bis 7 in Abhängigkeit von Anspruch 2, wobei der Fahrzeuganhänger ferner eine Ladefläche aufweist, die auf dem Fahrzeugrahmen (1) ausgebildet ist und in der mindestens eine Öffnung oberhalb der Innenbereiche (E) der Querträger (4) vorgesehen ist, die zur Durchführung eines Zurrelements (8) verwendet wird.

9. Verwendung nach einem der Ansprüche 3 bis 7 in Abhängigkeit von Anspruch 3, wobei der Fahrzeuganhänger ferner eine Mehrzahl von Bretttaschen zur Aufnahme von Seitenbrettern (16) aufweist, wobei die unteren Bretttaschen derart ausgebildet sind, dass zwischen unteren Kanten (17) der unteren Seitenbretter (16) und dem oberen Wandabschnitt (11) der Seitenlängsprofile (2) ein vertikaler Abstand (H) von mindestens 30 mm ausgebildet ist, der zur Durchführung eines Zurrelements (8) verwendet wird.

## Claims

1. A use of a hole (7) in a transversal beam (4) connecting the longitudinal beams (3) of a vehicle frame (1) of a vehicle trailer for detachable attachment of a hook (9) of a lashing element (8) at a rim (7a) of the hole (7), which is formed in an outer region (D) of one of the transversal beams (4) extending from an end (10) of the transversal beam (4) up to a depth of 100 mm to 800 mm along the transversal beam (4) towards the opposite end (10).

2. The use according to claim 1, wherein, in inner regions (E) extending between the outer regions (D) of the transversal beams (4), at least one hole (7) is formed, and at least one of the holes (7) in the inner regions (E) is used for detachable attachment of a hook (9) of a lashing element (8) at a rim (7a) of the hole (7).

3. The use according to one of the preceding claims, wherein the vehicle frame (1) further comprises two lateral longitudinal profiles (2) each comprising an upper wall portion (11), a lateral wall portion (12), and an inclined wall portion (13), wherein a plurality of holes (15) is formed along an edge (14) between the inclined wall portion (13) and the lateral wall portion (12), and at least one of the plurality of holes (15) is used for detachable attachment of a hook (9) of a lashing element (8) at a rim (15a) of the hole (15).

4. The use according to claim 3, wherein the inclined wall portion (13) is formed at an angle (α) in a range of 20° to 80° with respect to the upper wall portion (11).

5. The use according to any of the preceding claims, wherein the holes (7, 15) are formed as through holes.

6. The use according to any of the preceding claims, wherein the holes (7, 15) have a diameter in a range of 10 mm to 300 mm.

7. The use according to any of the preceding claims, wherein the transversal beams (4) and the lateral longitudinal profiles (2) have a thickness in a range of 1 mm to 40 mm at the rims (7a, 15a) of the holes (7, 15).

8. The use according to any of the claims 2 to 7 depending on claim 2, wherein the vehicle trailer further comprises a loading area which is formed on the vehicle frame (1) and in which at least one opening is provided above the inner regions (E) of the transversal beams (4), which is used for passing through a lashing element (8).

9. The use according to any of the claims 3 to 7 depending on claim 3, wherein the vehicle trailer further comprises a plurality of board pockets for receiving side boards (16), wherein the lower board pockets are configured such that a vertical gap (H) of at least 30 mm is formed between the lower edges (17) of the lower side boards (16) and the upper wall portion (11) of the lateral longitudinal profiles (2), which is used for passing through a lashing element (8).

## Revendications

1. Utilisation d'un trou (7) dans une traverse (4), qui relie les longerons (3) d'un châssis de véhicule (1) d'une remorque de véhicule, servant à fixer de manière amovible un crochet (9) d'un élément d'arrimage (8) au niveau d'un bord (7a) du trou (7), qui est réalisé dans une zone extérieure (D) d'une des traverses (4), laquelle zone extérieure s'étend depuis une extrémité (10) de la traverse (4) jusqu'à une profondeur de 100 mm à 800 mm le long de la traverse (4) en direction de l'extrémité (10) opposée.

2. Utilisation selon la revendication 1, dans laquelle respectivement au moins un trou (7) est réalisé dans des zones intérieures (E), qui s'étendent entre les zones extérieures (D) des traverses (4), et au moins un des trous (7) est utilisé dans les zones intérieures (E) afin de fixer de manière amovible un crochet (9) d'un élément d'arrimage (8) au niveau d'un bord (7a) du trou (7).

3. Utilisation selon l'une quelconque des revendications précédentes, dans laquelle le châssis de véhicule (1) présente en outre deux profils longitudinaux latéraux (2), qui présentent respectivement un segment de paroi supérieur (11), un segment de paroi latéral (12) et un segment de paroi oblique (13), dans laquelle une pluralité de trous (15) est réalisée le long d'une arête (14) entre le segment de paroi oblique (13) et le segment de paroi latéral (12) et au moins un de la pluralité de trous (15) est utilisé afin de fixer de manière amovible un crochet (9) d'un élément d'arrimage (8) au niveau d'un bord (15a) du trou (15).

4. Utilisation selon la revendication 3, dans laquelle le segment de paroi oblique (13) est réalisé selon un angle (α) dans une plage de 20° à 80° par rapport au segment de paroi supérieur (11).

5. Utilisation selon l'une quelconque des revendications précédentes, dans laquelle les trous (7, 15) sont réalisés sous la forme de trous traversants.

6. Utilisation selon l'une quelconque des revendications précédentes, dans laquelle les trous (7, 15) présentent un diamètre dans une plage de 10 mm à 300 mm.

7. Utilisation selon l'une quelconque des revendications précédentes, dans laquelle les traverses (4) et les profils longitudinaux latéraux (2) présentent au niveau des bords (7a, 15a) des trous (7, 15) une épaisseur dans une plage de 1 mm à 40 mm.

8. Utilisation selon l'une quelconque des revendications 2 à 7 en fonction de la revendication 2, dans laquelle la remorque de véhicule présente en outre une surface de chargement, qui est réalisée sur le châssis de véhicule (1) et dans laquelle est prévue au moins une ouverture au-dessus des zones intérieures (E) des traverses (4), laquelle est utilisée afin de faire passer de part en part un élément d'arrimage (8).

9. Utilisation selon l'une quelconque des revendications 3 à 7 en fonction de la revendication 3, dans laquelle la remorque de véhicule présente en outre une multitude de compartiments de planche servant à recevoir des planches latérales (16), dans laquelle les compartiments de planche inférieurs sont réalisés de telle manière qu'un écartement (H) vertical d'au moins 30 mm, qui est utilisé pour faire passer de part en part un élément d'arrimage (8), est réalisé entre des arêtes (17) inférieures des planches latérales (16) inférieures et le segment de paroi supérieur (11) des profils longitudinaux latéraux (2).
